# EUROPEAN PATENT APPLICATION

(11) **EP 4 794 325 A1**
(43) Date of publication of application: **19.08.2026**
(21) Application number: 26158696.0
(22) Date of filing: 16.02.2026
(51) Int. Cl.: H04N 9/31

(54) **DISPLAY METHOD, INFORMATION PROCESSING APPARATUS, AND NON-TRANSITORY COMPUTER-READABLE STORAGE MEDIUM STORING PROGRAM**

(30) Priority: 17.02.2025 JP 2025023741
(71) Applicant: Seiko Epson Corporation, Tokyo 160-8801 (JP)
(72) Inventor: SHINOHARA, Shinpei, Suwa-shi, 392-8502 (JP); TAKEUCHI, Kota, Suwa-shi, 392-8502 (JP)
(74) Representative: Lewis Silkin LLP

(57) **Abstract**

According to an aspect of the present disclosure, there is provided a display method including displaying, with a display apparatus, a first image indicating a position, on a projection surface in a first captured image, of a feature portion serving as a mark of the projection surface extracted based on the first captured image acquired by imaging the projection surface with an imaging apparatus in a first period and displaying, with the display apparatus, a second image indicating a position, on the projection surface in a second captured image, of a feature portion serving as a mark of the projection surface extracted based on the second captured image acquired by imaging the projection surface with the imaging apparatus in a second period later than the first period.

## Description

The present application is based on, and claims priority from JP Application Serial Number 2025-023741, filed February 17, 2025, the disclosure of which is hereby incorporated by reference herein in its entirety.

### BACKGROUND

### 1. Technical Field

The present disclosure relates to a display method, an information processing apparatus, and a non-transitory computer-readable storage medium storing a program.

### 2. Related Art

A technique of preventing a projection position of a projection image with respect to a projection surface from deviating from an initial position has been used.

For example, JP-A-2022-092169 discloses a projector that corrects, based on a first mapping relationship, a second mapping relationship, and a projective transformation parameter, a projection image to a projection image projected at an initial position in a first period.

In the first period, the projector extracts, from a first captured image, four first projection points, which are the four corners of a first projection image, and four first feature points serving as feature points of a projection surface. In a second period later than the first period, the projector extracts, from a second captured image, four second projection points, which are the four corners of a second projection image, and four second feature points serving as feature points of the projection surface. The first mapping relationship is a relationship between the first projection points and first corresponding points corresponding to the first projection points in a display panel. The second mapping relationship is a relationship between the second projection points and second corresponding points corresponding to the second projection points in the display panel. The projective transformation parameter is a parameter for performing projective transformation from the first feature points to the second feature points.

JP-A-2022-092169 is an example of the related art.

The projector described in JP-A-2022-092169 does not include means for a user to grasp a situation as to whether parts extracted as corners of the projection surface are the same or substantially the same in the two periods.

### SUMMARY

According to an aspect of the present disclosure, there is provided a display method including: displaying, with a display apparatus, a first image indicating a position, on a projection surface in a first captured image, of a feature portion serving as a mark of the projection surface extracted based on the first captured image acquired by imaging the projection surface with an imaging apparatus in a first period; and displaying, with the display apparatus, a second image indicating a position, on the projection surface in a second captured image, of a feature portion serving as a mark of the projection surface extracted based on the second captured image acquired by imaging the projection surface with the imaging apparatus in a second period later than the first period.

According to an aspect of the present disclosure, there is provided an information processing apparatus including: a first display controller configured to display, with a display apparatus, a first image indicating a position, on a projection surface in a first captured image, of a feature portion serving as a mark of the projection surface extracted based on the first captured image acquired by imaging the projection surface with an imaging apparatus in a first period; and a second display controller configured to display, with the display apparatus, a second image indicating a position, on the projection surface in a second captured image, of a feature portion serving as a mark of the projection surface extracted based on the second captured image acquired by imaging the projection surface with the imaging apparatus in a second period later than the first period.

A non-transitory computer-readable storage medium storing a program for causing a processor to execute: displaying, with a display apparatus, a first image indicating a position, on a projection surface in a first captured image, of a feature portion serving as a mark of the projection surface extracted based on the first captured image acquired by imaging the projection surface with an imaging apparatus in a first period; and displaying, with the display apparatus, a second image indicating a position, on the projection surface in a second captured image, of a feature portion serving as a mark of the projection surface extracted based on the second captured image acquired by imaging the projection surface with the imaging apparatus in a second period later than the first period.

### BRIEF DESCRIPTION OF THE DRAWINGS

FIG. 1 is a block diagram illustrating an overall configuration of a projection system.
FIG. 2 is a block diagram illustrating a configuration example of a projection device.
FIG. 3 is a block diagram illustrating a configuration example of an information processing apparatus.
FIG. 4 is a diagram illustrating operations of a processing apparatus and a storage device at the time of construction of the projection system.
FIG. 5 is a diagram illustrating operations of the processing apparatus and the storage device at the time of restoration of the projection system.
FIG. 6 is a functional block diagram of a display controller.
FIG. 7 is a diagram illustrating an example of a display screen.
FIG. 8 is a diagram illustrating an example of a display screen.
FIG. 9 is a diagram illustrating an example of a display screen.
FIG. 10 is a diagram illustrating an example of the display screen.
FIG. 11 is a diagram illustrating an example of a display screen.
FIG. 12 is a diagram illustrating an example of a display screen.
FIG. 13 is a diagram illustrating an example of the display screen.
FIG. 14 is a diagram illustrating an example of a display screen.
FIG. 15 is a diagram illustrating an example of the display screen.
FIG. 16 is a diagram illustrating an example of the display screen.

### DESCRIPTION OF EMBODIMENTS

Hereinafter, a display method, an information processing apparatus, and a non-transitory computer-readable storage medium storing a program according to an embodiment are explained with reference to the drawings. In the drawings, dimensions and scales of units are differentiated from actual ones as appropriate. The embodiment explained below is a preferred specific example. Therefore various technically preferable limitations are added to the embodiment. However, the scope of the present disclosure is not limited to the embodiment unless there is particularly a description to the effect that the present disclosure is limited thereto in the following explanation.

### 1: First embodiment

### 1-1: Overall configuration

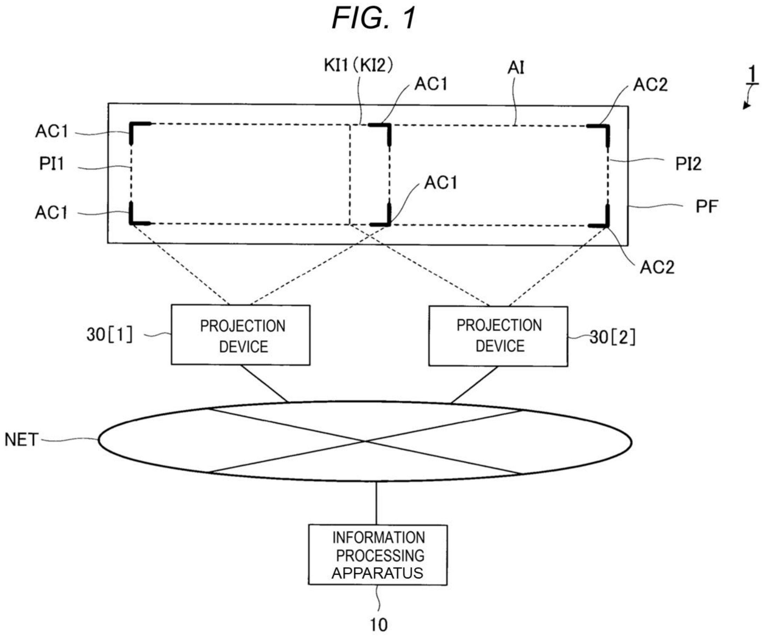

FIG. 1 is a block diagram illustrating an overall configuration of a projection system 1 according to a first embodiment. The projection system 1 includes one information processing apparatus 10 and one or a plurality of projection devices 30. For convenience of explanation, the projection system 1 illustrated in FIG. 1 includes two projection devices 30[1] and 30[2]. However, the number of projection devices 30 is not limited to two and may be one or three or more.

The projection system 1 is a system for executing multi-projection. Specifically, the projection device 30[1] projects a projection image PI1 onto a projection surface PF. Similarly, the projection device 30[2] projects a projection image PI2 onto the projection surface PF. When a partial image KI1 included in the projection image PI1 and a partial image KI2 included in the projection image PI2 are superimposed on each other on the projection surface PF, one entire image AI is displayed on the projection surface PF.

The information processing apparatus 10 controls the projection device 30[1] and the projection device 30[2] in order to execute the multi-projection.

The information processing apparatus 10 may be a personal computer (PC), may be a tablet terminal, or may be a smartphone.

In FIG. 1, the information processing apparatus 10, the projection device 30[1], and the projection device 30[2] are communicably connected to one another via a communication network NET.

The projection device 30[1] projects anchor images AC1 onto the projection surface PF. The anchor images AC1 are images indicating a projection region of the projection image PI1 from the projection device 30[1] on the projection surface PF. The anchor images AC1 are parts of the frame lines of the projection image PI1 on the projection surface PF. In some embodiments, the anchor images AC1 may be the frame line itself of the projection image PI1. In the example illustrated in FIG. 1, the anchor images AC1 are images including four vertices of the projection image PI1. In the present embodiment, the shape of the anchor images AC1 is an L shape.

At the time of construction of the projection system 1, a user of the projection system 1 operates the information processing apparatus 10 or the projection device 30[1] to adjust the positions of the anchor images AC1 on the projection surface PF. Further, the user adjusts the positions of the anchor images AC1 on the projection surface PF to set the position and the size of a region occupied by the projection image PI1 on the projection surface PF.

The projection device 30[2] projects anchor images AC2 onto the projection surface PF. The anchor images AC2 are images indicating a projection region from the projection device 30[2] on the projection surface PF. The anchor images AC2 are parts of the frame lines of the projection image P12 on the projection surface PF. In some embodiments, the anchor images AC2 may be the frame line itself of the projection image PI2. In the example illustrated in FIG. 1, the anchor images AC2 are images including two vertices opposite to the projection image PI1 among four vertices of the projection image PI2.

At the time of the construction of the projection system 1, the user of the projection system 1 operates the information processing apparatus 10 or the projection device 30[2] to adjust the positions of the anchor images AC2 on the projection surface PF. Further, the user adjusts the positions of the anchor images AC2 on the projection surface PF to set the position and the size of a region occupied by the projection image PI2 on the projection surface PF.

At the time of restoration of the projection system 1 after elapse of a predetermined time from the construction of the projection system 1, the anchor images AC1 and the anchor images AC2 can be automatically displayed on the projection surface PF without involving an operation of the user. Note that the "time of restoration of the projection system 1" is, as an example, a time when, after the projection system 1 is constructed, the projection system 1 is turned off and then the projection system 1 is turned on again. At the time of the restoration of the projection system 1, the positions of the projection device 30[1] and the projection device 30[2] sometimes change according to elapse of time from the time of the construction of the projection system 1.

The "time of construction" described above is included in a "first period" as an example. On the other hand, the "time of restoration" described above is included in a "second period" later than the "first period" as an example. The "first period" includes, in addition to the "time of construction" described above, "time of maintenance" in which the positions and the postures of the projection device 30[1] and the projection device 30[2] constructed at the "time of construction" are maintained as they are.

As explained below, the information processing apparatus 10 stores, at the time of the construction of the projection system 1, the positions of feature portions present on the projection surface PF and the positions of the anchor images AC1 and the anchor images AC2 and calculates, at the time of the restoration of the projection system 1, based on the positions of the feature portions present on the projection surface PF, positions where the anchor images AC1 and the anchor images AC2 are displayed again.

The anchor images AC1 and the anchor images AC2 may be displayed on a display apparatus 130 explained below provided in the information processing apparatus 10.

### 1-2: Configuration of the projection device

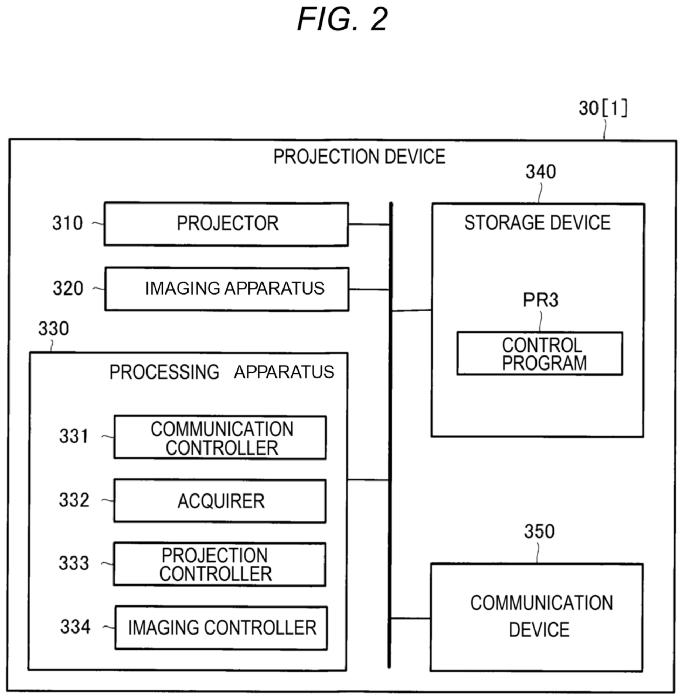

FIG. 2 is a block diagram illustrating a configuration example of the projection device 30[1]. The projection device 30[1] includes a projector 310, an imaging apparatus 320, a processing apparatus 330, a storage device 340, and a communication device 350. The elements of the projection device 30[1] are connected to one another by a single bus or a plurality of buses for communicating information. The elements of the projection device 30[1] may include one or a plurality of pieces of equipment and some of the elements of the projection device 30[1] may be omitted.

Since the projection device 30[2] is configured the same as the projection device 30[1], illustration and explanation of the projection device 30[2] are omitted.

The projector 310 is a device that projects an image acquired by an acquirer 332 explained below onto the projection surface PF. The projector 310 projects various images under the control of the processing apparatus 330. The projector 310 includes, for example, a light source, a liquid crystal panel, and a projection lens, modulates light of a light source using the liquid crystal panel, and projects the modulated light onto a screen, a wall, or the like via the projection lens. The liquid crystal panel is an example of a light modulation element that generates an image corresponding to input image data. The light modulation element may not be the liquid crystal panel and may be a digital mirror device (DMD).

The imaging apparatus 320 is a device that images the outside world of the projection device 30[1]. In the present embodiment, the imaging apparatus 320 images the projection surface PF. As a result of imaging the projection surface PF, the imaging apparatus 320 generates a captured image TI in which the projection surface PF is imaged. The imaging apparatus 320 is, as an example, a camera incorporated in the projection device 30[1]. However, as another example, the imaging apparatus 320 may be an external camera such as a web camera.

The processing apparatus 330 is a processor that controls the entire projection device 30[1] and includes, for example, a single chip or a plurality of chips. The processing apparatus 330 includes, for example, a central processing unit (CPU) including an interface with peripheral devices, a calculation device, and a register. Some or all of the functions of the processing apparatus 330 may be implemented by hardware such as a digital signal processor (DSP), an application specific integrated circuit (ASIC), a programmable logic device (PLD), or a field programmable gate array (FPGA). The processing apparatus 330 executes various kinds of processing in parallel or sequentially.

The storage device 340 is a recording medium readable by the processing apparatus 330 and stores a plurality of programs including a control program PR3 to be executed by the processing apparatus 330. The storage device 340 may store the projection image PI1 to be projected by the projection device 30[1].

The storage device 340 may include, for example, at least one of a read only memory (ROM), an erasable programmable ROM (EPROM), an electrically erasable programmable ROM (EEPROM), and a random access memory (RAM). The storage device 340 may be called register, cache, main memory, main storage device, or the like.

The communication device 350 is hardware serving as a transmission and reception device for communicating with other devices. The communication device 350 is also called, for example, network device, network controller, network card, or communication module. The communication device 350 may include a connector for wired connection and may include an interface circuit corresponding to the connector. The communication device 350 may include a wireless communication interface. Examples of the connector for wired connection and the interface circuit include those conforming to a wired LAN, IEEE 1394, and USB. Examples of the wireless communication interface include those conforming to a wireless LAN, Bluetooth (registered trademark), and the like.

The processing apparatus 330 functions as a communication controller 331, an acquirer 332, a projection controller 333, and an imaging controller 334 by reading the control program PR3 from the storage device 340 and executing the control program PR3. The control program PR3 may be transmitted, via the communication network NET, from another device such as a server that manages the information processing apparatus 10 or the projection device 30[1].

The communication controller 331 causes the communication device 350 to transmit and receive various data, information, and signals to and from other devices. The "other devices" include the information processing apparatus 10 and the projection device 30[2].

As an example, the communication controller 331 causes the communication device 350 to receive various control signals transmitted from the information processing apparatus 10. As another example, the communication controller 331 causes the communication device 350 to receive image data indicating the projection image PI1 transmitted from the information processing apparatus 10. As another example, the communication controller 331 causes the communication device 350 to transmit image data indicating the captured image TI captured by the imaging apparatus 320 to the information processing apparatus 10.

The acquirer 332 acquires the projection image PI1. As an example, the acquirer 332 may acquire the projection image PI1 stored in the storage device 340. Alternatively, as another example, the acquirer 332 may acquire the projection image PI1 from the information processing apparatus 10.

The projection controller 333 causes the projector 310 to project the projection image PI1 acquired by the acquirer 332 onto the projection surface PF.

The imaging controller 334 causes the imaging apparatus 320 to image the projection surface PF. The captured image TI of the projection surface PF captured by the imaging apparatus 320 is acquired by the acquirer 332 and transmitted to the information processing apparatus 10 by the communication controller 331.

### 1-3: Configuration of the information processing apparatus

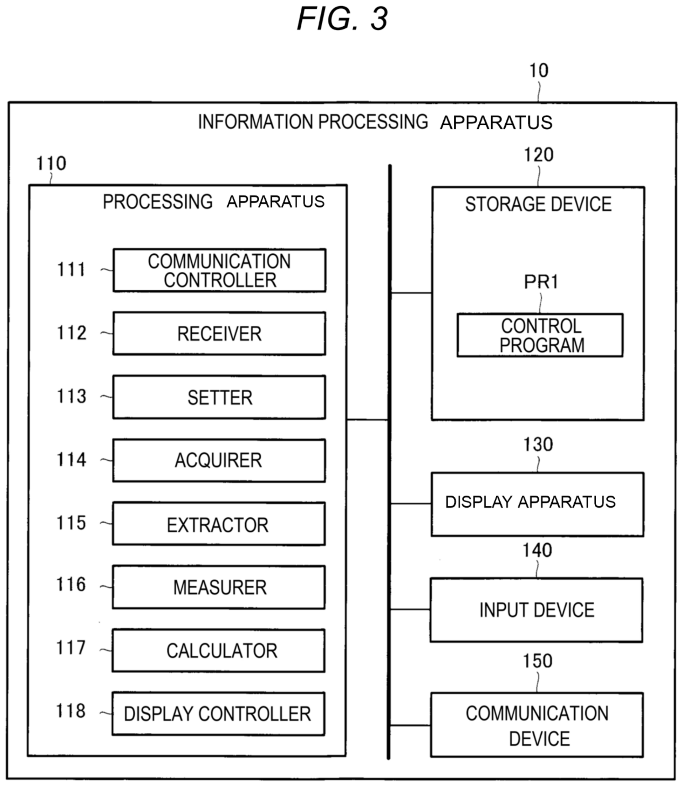

FIG. 3 is a block diagram illustrating a configuration example of the information processing apparatus 10. The information processing apparatus 10 includes a processing apparatus 110, a storage device 120, a display apparatus 130, an input device 140, and a communication device 150. The elements of the information processing apparatus 10 are connected to one another by a single bus or a plurality of buses for communicating information.

The processing apparatus 110 is a processor that controls the entire information processing apparatus 10 and includes, for example, a single chip or a plurality of chips. The processing apparatus 110 includes, for example, a central processing unit (CPU) including an interface with peripheral devices, a calculation device, and a register. Some or all of the functions of the processing apparatus 110 may be implemented by hardware such as a DSP, an ASIC, a PLD, or an FPGA. The processing apparatus 110 executes various kinds of processing in parallel or sequentially.

The storage device 120 is a recording medium readable by the processing apparatus 110 and stores a plurality of programs including a control program PR1 to be executed by the processing apparatus 110. The storage device 120 stores various parameters calculated by a calculator 117 explained below.

The storage device 120 may include at least one of, for example, a ROM, an EPROM, an EEPROM, and a RAM. The storage device 120 may be called register, cache, main memory, main storage device, or the like.

The display apparatus 130 is a device that displays an image and character information. The display apparatus 130 displays various images under the control by the processing apparatus 110. For example, various display panels such as a liquid crystal display panel and an organic EL (Electro Luminescence) display panel are suitably used as the display apparatus 130.

The input device 140 is equipment that receives an operation of the user. For example, the input device 140 includes a pointing device such as a keyboard, a touch pad, a touch panel, or a mouse. When the input device 140 includes the touch panel, the input device 140 may also serve as the display apparatus 130.

The communication device 150 is hardware serving as a transmission and reception device for communicating with other devices. The communication device 150 is also called, for example, network device, network controller, network card, or communication module. The communication device 150 may include a connector for wired connection and may include an interface circuit corresponding to the connector. The communication device 150 may include a wireless communication interface. Examples of the connector for wired connection and the interface circuit include those conforming to a wired LAN, IEEE 1394, and USB. Examples of the wireless communication interface include those conforming to a wireless LAN, Bluetooth (registered trademark), and the like.

The processing apparatus 110 functions as a communication controller 111, a receiver 112, a setter 113, an acquirer 114, an extractor 115, a measurer 116, a calculator 117, and a display controller 118 by reading the control program PR1 from the storage device 120 and executing the control program PR1. The control program PR1 may be transmitted, via the communication network NET, from another device such as a server that manages the information processing apparatus 10.

The communication controller 111 causes the communication device 150 to transmit and receive various data, information, and signals to and from other devices. The "other devices" include the projection device 30[1] and the projection device 30[2].

As an example, the communication controller 111 causes the communication device 150 to transmit various control signals to the projection device 30[1] and the projection device 30[2]. As another example, the communication controller 111 causes the communication device 150 to transmit image information indicating the projection image PI1 to the projection device 30[1]. As another example, the communication controller 111 causes the communication device 150 to transmit image information indicating the projection image PI2 to the projection device 30[2]. As another example, the communication controller 111 causes the communication device 150 to receive image information indicating the captured image TI captured by each of the projection device 30[1] and the projection device 30[2].

For simplification of explanation, in the following explanation of the functions of the receiver 112 to the display controller 118, processing performed using the captured image TI captured by the projection device 30[1] is mainly explained and explanation of processing performed using the captured image TI captured by the projection device 30[2] is omitted.

The receiver 112 receives an operation of the user for adjusting the positions of the anchor images AC1 on the projection surface PF. Specifically, the user adjusts the positions of the anchor images AC1 on the projection surface PF with an operation performed using the input device 140. The receiver 112 receives the operation by the user performed using the input device 140.

The setter 113 sets the positions of the anchor images AC1 on the projection surface PF based on the operation of the user received by the receiver 112. As a result, coordinate values of the anchor images AC1 in a panel coordinate system, which is a coordinate system in the liquid crystal panel provided in the projection device 30[1], are measured. The coordinate values of the anchor images AC1 are, for example, vertex coordinates of L shapes.

The acquirer 114 acquires the captured image TI from the projection device 30[1]. The captured image TI is, as an example, an image including the entire projection surface PF captured by the projection device 30[1]. More specifically, at both the time of the construction and the time of the restoration of the projection system 1, the acquirer 114 acquires, from the projection device 30[1], the captured image TI in which the entire projection surface PF is imaged. A captured image TI1 acquired by the acquirer 114 at the time of the construction of the projection system 1 is an example of a "first captured image". The captured image TI1 is an image captured in the "first period" described above. The captured image TI1 includes the anchor images AC1. A captured image TI2 acquired by the acquirer 114 at the time of the restoration of the projection system 1 is an example of a "second captured image". The captured image TI2 is an image captured in the "second period" described above.

At the time of the construction of the projection system 1 the extractor 115 extracts a feature portion serving as a mark of the projection surface PF based on the captured image TI1 acquired by the acquirer 114. Here, the "mark of the projection surface PF" means a "mark for the anchor images AC1 to be displayed on the projection surface PF". In other words, the mark of the projection surface PF is a portion of the projection surface PF serving as a reference for adjusting the position and the shape of the entire image Al, such as a corner or a side of the projection surface PF. The feature portion is a portion serving as the reference for the projection surface PF. The user or the processing apparatus 110 recognizes a portion characterizing the projection surface PF, such as a corner or a side of the projection surface PF, as the feature portion, that is, the mark. Specifically, as an example, the extractor 115 extracts a plurality of edge pixels from the captured image TI1 with an edge detection algorithm and detects an edge ED obtained by connecting the plurality of edge pixels. The extractor 115 detects a plurality of edges ED. The edge detection algorithm is, for example, Canny edge detection. Further, the extractor 115 extracts an intersection between edges ED as a feature portion. That is, the feature portion in the present embodiment is a corner of the projection surface PF. The feature portion may not be the corner and may be a side of the projection surface PF. When the feature portion is the side, the extractor 115 may perform only processing of detecting the edge ED without extracting the intersection. When a plurality of the feature portions are present, as an example, the extractor 115 extracts, as the mark of the projection surface PF, a feature portion located nearest to the anchor images AC1 in the captured image TI1. The extractor 115 may extract the feature portion using AKAZE (Accelerated-KAZE), which is an example of a feature point extraction algorithm. When using the feature point extraction algorithm, the extractor 115 may directly extract a corner of the projection surface PF as the feature portion without detecting the edge ED.

Similarly, at the time of the restoration of the projection system 1 the extractor 115 extracts a feature portion serving as a mark of the projection surface PF based on the captured image TI2 acquired by the acquirer 114.

As an example, these marks are located near the corners of the projection surface PF.

The measurer 116 measures coordinate values of the anchor images AC1 in the panel coordinate system, which is the coordinate system in the liquid crystal panel provided in the projection device 30[1].

The measurer 116 measures a correspondence relationship between the panel coordinate system of the liquid crystal panel provided in the projection device 30[1] and a camera coordinate system, which is a coordinate system in the imaging apparatus 320. The panel coordinate system is a two-dimensional coordinate system for indicating coordinate values of pixels of the liquid crystal panel. The camera coordinate system is a two-dimensional coordinate system for indicating coordinate values of pixels of the captured image TI.

As an example, the measurer 116 causes the projection device 30[1] to project a pattern image having a checkered flag shape onto the projection surface PF. The measurer 116 causes the projection device 30[1] to capture the pattern image displayed on the projection surface PF. Then, the measurer 116 measures a correspondence relationship between a coordinate value in the panel coordinate system of a first feature point included in the pattern image on the liquid crystal panel and a coordinate value in the camera coordinate system of a second feature point corresponding to the first feature point included in the pattern image on the captured image TI.

The measurer 116 measures a coordinate value in the camera coordinate system of the feature portion serving as the mark of the projection surface PF extracted by the extractor 115 at the time of the construction of the projection system 1.

The calculator 117 calculates various parameters explained below.

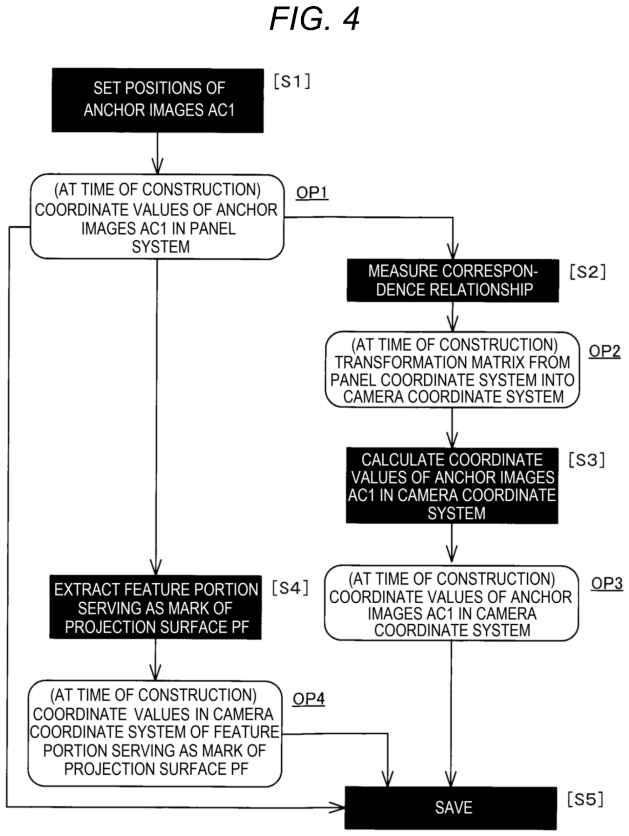

FIG. 4 is a diagram illustrating operations of the processing apparatus 110 and the storage device 120 at the time of the construction of the projection system 1. In FIG. 4, the processing apparatus 110 mainly functions as the setter 113, the extractor 115, the measurer 116, and the calculator 117. In the diagram of FIG. 4, black boxes indicate processing itself in steps explained below. White boxes indicate output results by the processing in the steps indicated by the black boxes.

In step S1, the processing apparatus 110 functions as the setter 113. The processing apparatus 110 sets the positions of the anchor images AC1 on the projection surface PF. The processing apparatus 110 functions as the measurer 116. The processing apparatus 110 measures coordinate values OP1 of the anchor images AC1 in the panel coordinate system.

In step S2, the processing apparatus 110 functions as the measurer 116. The processing apparatus 110 measures a correspondence relationship between a coordinate value in the panel coordinate system of a first pattern feature point and a coordinate value in the camera coordinate system of a second pattern feature point. The "coordinate value in the panel coordinate system of a first pattern feature point " described above is a feature point included in the pattern image on the liquid crystal panel. The "coordinate value in the camera coordinate system of a second pattern feature point" is a feature point corresponding to the first pattern feature point included in the pattern image on the captured image TI1. The processing apparatus 110 functions as the calculator 117. The processing apparatus 110 calculates a transformation matrix OP2 from the panel coordinate system into the camera coordinate system based on the correspondence relationship.

In step S3, the processing apparatus 110 functions as the calculator 117. The processing apparatus 110 calculates coordinate values OP3 of the anchor images AC1 in the camera coordinate system by multiplying the coordinate values of the anchor images AC1 in the panel coordinate system calculated in step S1 by the transformation matrix OP2 calculated in step S2.

In step S4, the processing apparatus 110 functions as the extractor 115. The processing apparatus 110 extracts a feature portion serving as a mark of the projection surface PF based on the captured image TI1. The processing apparatus 110 functions as the measurer 116. The processing apparatus 110 measures a coordinate value OP4 in the camera coordinate system of the feature portion serving as the mark of the projection surface PF.

In the step S4, it is suitable that a totally white pattern image, a totally black pattern image, or a gradation pattern image is projected onto the projection surface PF from the projection device 30[1].

In step S5, the storage device 120 stores the coordinate values OP1 of the anchor images AC1 in the panel coordinate system measured in step S1, the coordinate values OP3 of the anchor images AC1 in the camera coordinate system calculated in step S3, and the coordinate value OP4 of the feature portion serving as the mark of the projection surface PF in the camera coordinate system measured in step S4. As a result, the coordinate values OP1 of the anchor images AC1 in the panel coordinate system, the coordinate values OP3 of the anchor images AC1 in the camera coordinate system, and the coordinate value OP4 of the feature portion serving as the mark of the projection surface PF in the camera coordinate system are stored in the storage device 120.

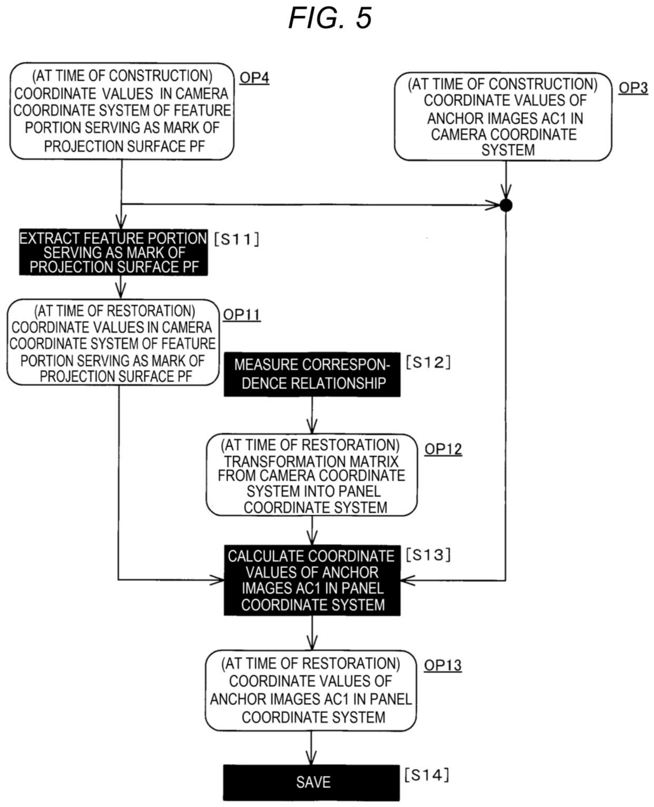

FIG. 5 is a diagram illustrating operations of the processing apparatus 110 and the storage device 120 at the time of the restoration of the projection system 1. In FIG. 5, the processing apparatus 110 mainly functions as the extractor 115, the measurer 116, and the calculator 117. In the diagram of FIG. 5, as in the diagram of FIG. 4, black boxes indicate processing itself in steps explained below. White boxes indicate output results by the processing in the steps indicated by the black boxes.

In step S11, the processing apparatus 110 functions as the extractor 115. The processing apparatus 110 extracts a feature portion serving as a mark of the projection surface PF based on the captured image TI2. More specifically, based on the coordinate value OP4 of the feature portion serving as the mark in the camera coordinate system measured at the time of the construction of the projection system 1, the processing apparatus 110 extracts a feature portion serving as a mark of the projection surface PF near the coordinate value in the captured image TI2. The processing apparatus 110 functions as the measurer 116. The processing apparatus 110 measures a coordinate value OP11 in the camera coordinate system of the feature portion serving as the mark of the projection surface PF.

In the step S11, it is suitable that a totally white pattern image, a totally black pattern image, or a gradation pattern image is projected onto the projection surface PF from the projection device 30[1].

It is suitable that a calculation method for the processing apparatus 110 to extract the feature portion serving as the mark of the projection surface PF based on the captured image TI2 in step S11 is the same as a calculation method for the processing apparatus 110 to extract the feature portion serving as the mark of the projection surface PF based on the captured image TI1 in step S4 explained above. The calculation method is, for example, a type of an algorithm. In the present embodiment, the calculation method in steps S4 and S11 is, for example, Canny edge detection. Even when the calculation method in step S11 is the same as the calculation method in step S4, for example, a threshold used in hysteresis threshold processing, that is, a value of a parameter specific to the algorithm may be different between step S4 and step S11.

In step S12, the processing apparatus 110 functions as the measurer 116. The processing apparatus 110 measures a correspondence relationship between a coordinate value in the panel coordinate system of a first pattern feature point and a coordinate value in the camera coordinate system of a second pattern feature point. The "coordinate value in the panel coordinate system of a first pattern feature point " described above is a feature point included in the pattern image on the liquid crystal panel. The "coordinate value in the camera coordinate system of the second pattern feature point" described above is a feature point corresponding to the first pattern feature point included in a pattern image on the captured image TI2. The processing apparatus 110 functions as the calculator 117. The processing apparatus 110 calculates a transformation matrix OP12 from the camera coordinate system into the panel coordinate system based on the correspondence relationship.

In step S13, the processing apparatus 110 functions as the calculator 117. The processing apparatus 110 calculates a difference between the coordinate value OP4 of the feature portion serving as the mark in the camera coordinate system stored at the time of the construction of the projection system 1 and the coordinate value OP11 of the feature portion serving as the mark in the camera coordinate system measured in step S11. The difference is calculated as, for example, a projective transformation matrix. Further, the processing apparatus 110 applies the difference to the coordinate values OP3 of the anchor images AC1 in the camera coordinate system stored at the time of the construction of the projection system 1 to calculate coordinate values of the anchor images AC1 in the camera coordinate system at the time of the restoration of the projection system 1. Further, the processing apparatus 110 multiplies the coordinate values of the anchor images AC1 in the camera coordinate system by the transformation matrix calculated in step S12 to calculate coordinate values OP13 of the anchor images AC1 in the panel coordinate system.

In step S14, the storage device 120 stores the coordinate values OP13 of the anchor images AC1 in the panel coordinate system measured in step S13. As a result, the coordinate values OP13 of the anchor images AC1 in the panel coordinate system are stored in the storage device 120.

In processing later than step S14, the processing apparatus 110 is capable of using, as appropriate, various parameters stored in the storage device 120.

In FIG. 3, the display controller 118 causes the display apparatus 130 to display various display screens DI. The display controller 118 causes the display apparatus 130 to display an image indicating the position on the projection surface PF of the feature portion serving as the mark of the projection surface PF.

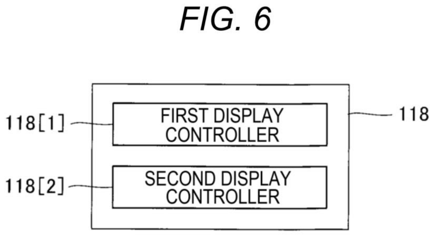

FIG. 6 is a functional block diagram of the display controller 118. The display controller 118 includes a first display controller 118[1] and a second display controller 118[2].

The first display controller 118[1] causes the display apparatus 130 to display an image indicating the position on the projection surface PF in the captured image TI1 of the feature portion serving as the mark of the projection surface PF extracted based on the captured image TI1. This control is an example of "first display control". The image is an example of a "first image".

More specifically, the first display controller 118[1] causes the display apparatus 130 to display the "first image" based on the coordinate value in the camera coordinate system of the feature portion serving as the mark of the projection surface PF at the time of the construction of the projection system 1 stored in step S5 in FIG. 4.

The second display controller 118[2] causes the display apparatus 130 to display an image indicating the position on the projection surface PF in the captured image TI2 of the feature portion serving as the mark of the projection surface PF extracted based on the captured image TI2. This control is an example of "second display control". The image is an example of a "second image".

More specifically, the second display controller 118[2] causes the display apparatus 130 to display the "second image" based on the coordinate value in the camera coordinate system of the feature portion serving as the mark of the projection surface PF at the time of the restoration of the projection system 1 measured in step S11 in FIG. 5.

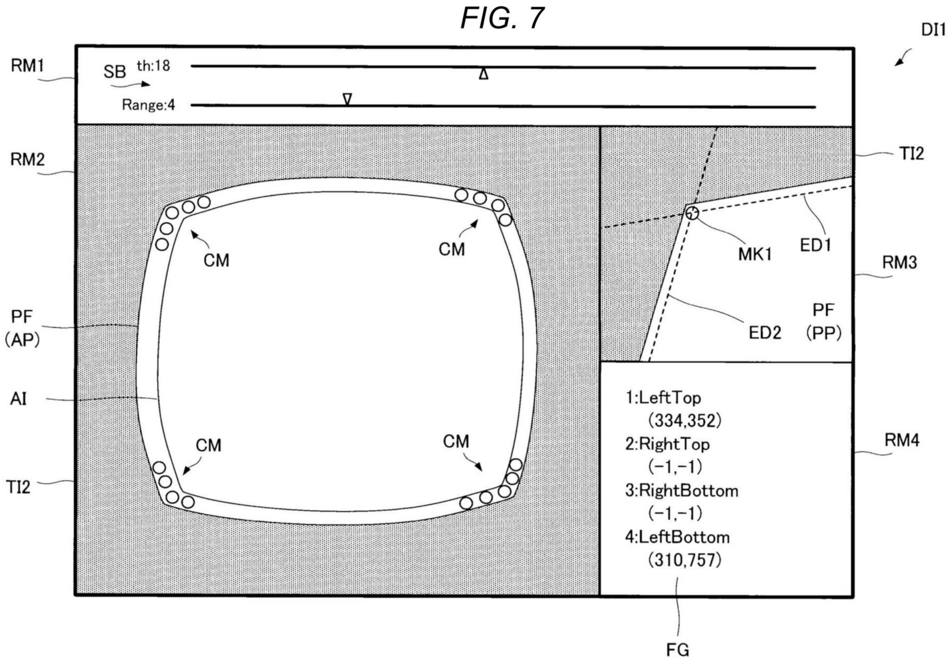

FIG. 7 is a diagram illustrating an example of a display screen DI1 that the display controller 118 causes the display apparatus 130 to display. The display screen DI1 includes regions RM1 to RM4.

In the region RM1, two slide bars SB are displayed. The slide bars SB are used to set a value of a parameter for extracting the feature portion serving as the mark of the projection surface PF. As an example, the slide bars SB are used to set a threshold used to extract a feature portion from the captured image TI and a maximum number of feature portions to be extracted.

In the region RM2, the entire captured image TI2 is displayed. The captured image TI2 displayed in the region RM2 includes an entire image AP of the projection surface PF. The entire image AP of the projection surface PF includes an entire image AI of the projection image PI generated by superimposing the projection image PI1 and the projection image PI2. A plurality of candidates CM for the mark of the projection surface PF are displayed near the corners of the entire image AP.

A part of the captured image TI2 is displayed in the region RM3. In the example illustrated in FIG. 7, the vicinity of the upper left corner of the projection surface PF in the captured image TI2 is displayed in the region RM3. The captured image TI2 displayed in the region RM3 includes a partial image PP of the projection surface PF. In the region RM3, an edge ED1 and an edge ED2 of the projection surface PF and an image MK1 located at an intersection of the edge ED1 and the edge ED2 are superimposed and displayed on the captured image TI2. The image MK1 is an image indicating the position of a mark selected at the present time point among the plurality of mark candidates CM displayed in the region RM2. The image MK1 is an example of the "second image".

In the region RM4, an image FG indicating coordinate values corresponding to the positions of feature portions serving as marks of the projection surface PF in the camera coordinate system is displayed. In the example illustrated in FIG. 7, the image FG indicates coordinate values corresponding to marks located near the four corners of the projection surface PF and selected at the present time point. The image FG is an example of the "second image".

In the example illustrated in FIG. 7, the entire captured image TI2 is displayed in the region RM2. However, the entire captured image TI1 may be displayed in the region RM2. In this case, a part of the captured image TI1 is displayed in the region RM3. In this case, the image MK1 and the image FG are examples of the "first image".

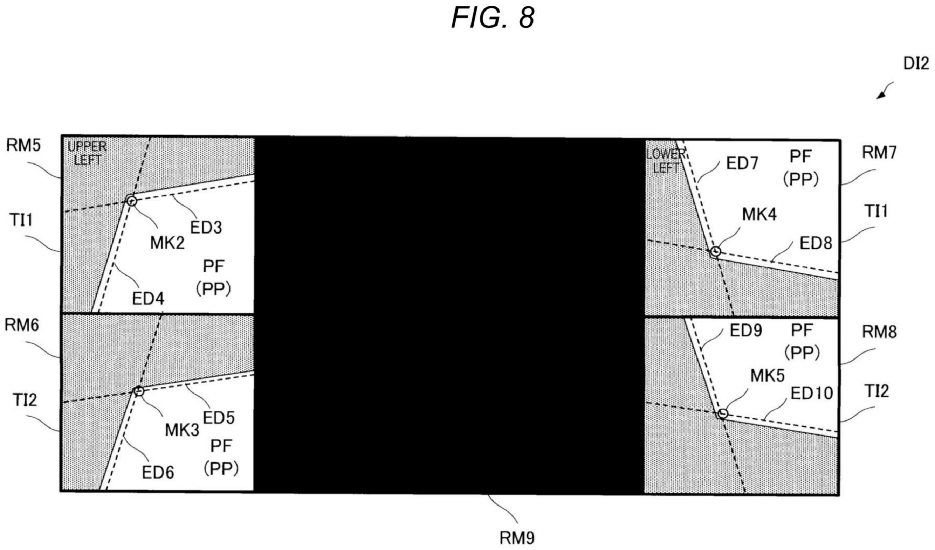

FIG. 8 is a diagram illustrating an example of a display screen DI2 that the display controller 118 causes the display apparatus 130 to display. The display screen DI2 includes regions RM5 to RM9.

A part of the captured image TI1 is displayed in the region RM5. In the example illustrated in FIG. 8, the vicinity of the upper left corner of the projection surface PF in the captured image TI1 is displayed in the region RM5. The captured image TI1 displayed in the region RM5 includes the partial image PP of the projection surface PF. In the region RM5, an edge ED3 and an edge ED4 of the projection surface PF and an image MK2 located at an intersection of the edge ED3 and the edge ED4 are superimposed and displayed on the captured image TI1. The image MK2 is an image indicating the position of a feature portion serving as a mark of the projection surface PF detected at the time of the construction of the projection system 1. The image MK2 is an example of the "first image".

A part of the captured image TI2 is displayed in the region RM6. In the example illustrated in FIG. 8, the vicinity of the upper left corner of the projection surface PF in the captured image TI2 is displayed in the region RM6. The captured image TI2 displayed in the region RM6 includes a partial image PP of the projection surface PF. In the region RM6, an edge ED5 and an edge ED6 of the projection surface PF and an image MK3 located at an intersection of the edge ED5 and the edge ED6 are superimposed and displayed on the captured image TI2. The image MK3 is an image indicating the position of a feature portion serving as a mark of the projection surface PF detected at the time of the restoration of the projection system 1. The image MK3 is also an image indicating the position of a mark selected at the present time point among the plurality of mark candidates CM displayed in the region RM2 of the display screen DI1. The image MK3 is an example of the "second image".

A part of the captured image TI1 is displayed in the region RM7. In the example illustrated in FIG. 8, the vicinity of the lower left corner of the projection surface PF in the captured image TI1 is displayed in the region RM7. The captured image TI1 displayed in the region RM7 includes the partial image PP of the projection surface PF. In the region RM7, an edge ED7 and an edge ED8 of the projection surface PF and an image MK4 located at an intersection of the edge ED7 and the edge ED8 are superimposed and displayed on the captured image TI1. The image MK4 is an image indicating the position of a feature portion serving as a mark of the projection surface PF detected at the time of the construction of the projection system 1. The image MK4 is an example of the "first image".

A part of the captured image TI2 is displayed in the region RM8. In the example illustrated in FIG. 8, the vicinity of the lower left corner of the projection surface PF in the captured image TI2 is displayed in the region RM8. The captured image TI2 displayed in the region RM8 includes the partial image PP of the projection surface PF. In the region RM8, an edge ED9 and an edge ED10 of the projection surface PF and an image MK5 located at an intersection of the edge ED9 and the edge ED10 are superimposed and displayed on the captured image TI2. The image MK5 is an image indicating the position of a feature portion as a mark of the projection surface PF detected at the time of the restoration of the projection system 1. The image MK5 is also an image indicating the position of a mark selected at the present time point among the plurality of mark candidates CM displayed in the region RM2 of the display screen DI1. The image MK5 is an example of the "second image".

As an example, nothing is displayed in the region RM9.

In the display screen DI2 exemplified in FIG. 8, the images MK2 to MK5 are displayed side by side.

The user of the projection system 1 visually compares the position of the image MK2 on the projection surface PF displayed in the region RM5 and the position of the image MK3 on the projection surface PF displayed in the region RM6. When both the positions are greatly different, the user operates the input device 140 to cause the display apparatus 130 to display the display screen DI1 exemplified in FIG. 7. Then, the user operates the slide bars SB displayed in the region RM1 and thereafter selects a candidate CM for a mark different from the mark selected at the present time point from the plurality of candidates CM for the mark of the projection surface PF displayed in the region RM2. As a result, in the region RM6 of the display screen DI2, the position of the image MK3 is updated to a position corresponding to the mark selected anew.

Similarly, the user of the projection system 1 visually compares the position of the image MK4 on the projection surface PF displayed in the region RM7 and the position of the image MK5 on the projection surface PF displayed in the region RM8. When both the positions are greatly different, the user operates the input device 140 to cause the display apparatus 130 to display the display screen DI1 exemplified in FIG. 7. Then, the user operates the slide bars SB displayed in the region RM1 and thereafter selects a candidate CM for a mark different from the mark selected at the present time point from the plurality of candidates CM for the mark of the projection surface PF displayed in the region RM2. As a result, in the region RM8 of the display screen DI2, the position of the image MK5 is updated to the position corresponding to the mark selected anew.

When the position and the posture of the projection device 30[1] are greatly different between the time of the construction of the projection system 1 and the time of the restoration of the projection system 1, the position of the image MK2 on the projection surface PF displayed in the region RM5 and the position of the image MK3 on the projection surface PF displayed in the region RM6 are greatly different. The position of the image MK4 on the projection surface PF displayed in the region RM7 and the position of the image MK5 on the projection surface PF displayed in the region RM8 are greatly different.

The position in the camera coordinate system of the mark of the projection surface PF corresponding to the image MK2 and the position in the camera coordinate system of the mark of the projection surface PF corresponding to the image MK3 being the same and the position in the camera coordinate system of the mark of the projection surface PF corresponding to the image MK4 and the position in the camera coordinate system of the mark of the projection surface PF corresponding to the image MK5 being the same are directly linked to the accuracy of maintaining the position and the posture of the projection device 30[1]. For this reason, in the present embodiment, in order to minimize a difference in the positions of the marks in the camera coordinate system, the display controller 118 causes the display apparatus 130 to display an extraction result of a target at the time of the restoration of the projection system 1 together with an extraction result of the target at the time of the construction of the projection system 1.

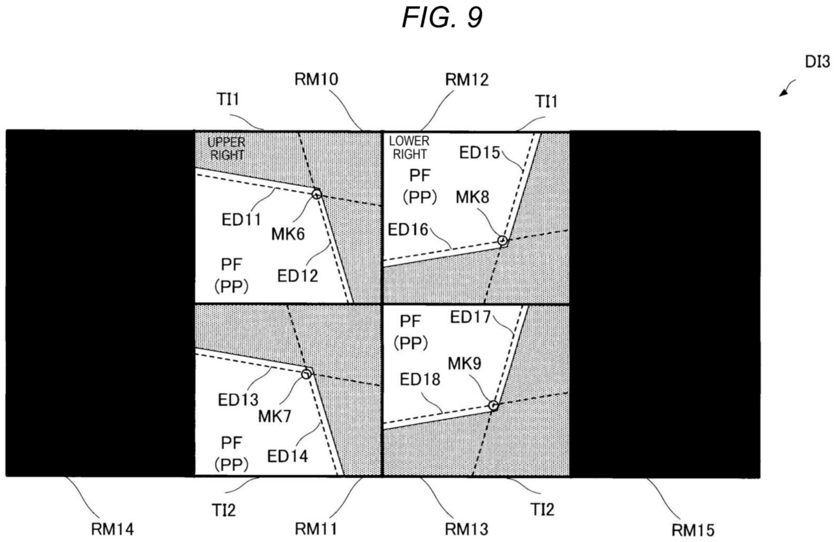

FIG. 9 is a diagram illustrating an example of a display screen DI3 that the display controller 118 causes the display apparatus 130 to display. The display screen DI3 includes regions RM10 to RM15.

A part of the captured image TI1 is displayed in the region RM10. In the example illustrated in FIG. 9, the vicinity of the upper right corner of the projection surface PF in the captured image TI1 is displayed in the region RM10. The captured image TI1 displayed in the region RM10 includes the partial image PP of the projection surface PF. In the region RM10, an edge ED11 and an edge ED12 of the projection surface PF and an image MK6 located at an intersection of the edge ED11 and the edge ED12 are superimposed and displayed on the captured image TI1. The image MK6 is an image indicating the position of a feature portion serving as a mark of the projection surface PF detected at the time of the construction of the projection system 1. The image MK6 is an example of the "first image".

A part of the captured image TI2 is displayed in the region RM11. In the example illustrated in FIG. 9, the vicinity of the upper right corner of the projection surface PF in the captured image TI2 is displayed in the region RM11. The captured image TI2 displayed in the region RM11 includes the partial image PP of the projection surface PF. In the region RM11, an edge ED13 and an edge ED14 of the projection surface PF and an image MK7 located at an intersection of the edge ED13 and the edge ED14 are superimposed and displayed on the captured image TI2. The image MK7 is an image indicating the position of a feature portion serving as the mark of the projection surface PF detected at the time of the restoration of the projection system 1. The image MK7 is also an image indicating the position of a mark selected at the present time point among the plurality of mark candidates CM displayed in the region RM2 of the display screen DI1. The image MK7 is an example of the "second image".

In the display screen DI2 exemplified in FIG. 8, the captured image TI1 and the captured image TI2 captured by the projection device 30[1] are used. However, in the display screen DI3, as an example, the captured image TI1 and the captured image TI2 captured by the projection device 30[2] are used.

A part of the captured image TI1 is displayed in the region RM12. In the example illustrated in FIG. 9, the vicinity of the lower right corner of the projection surface PF in the captured image TI1 is displayed in the region RM12. The captured image TI1 displayed in the region RM12 includes the partial image PP of the projection surface PF. In the region RM12, an edge ED15 and an edge ED16 of the projection surface PF and an image MK8 located at an intersection of the edge ED15 and the edge ED16 are superimposed and displayed on the captured image TI1. The image MK8 is an image indicating the position of a feature portion serving as a mark of the projection surface PF detected at the time of the construction of the projection system 1. The image MK8 is an example of the "first image".

A part of the captured image TI2 is displayed in the region RM13. In the example illustrated in FIG. 9, the vicinity of the lower right corner of the projection surface PF in the captured image TI2 is displayed in the region RM13. The captured image TI2 displayed in the region RM13 includes the partial image PP of the projection surface PF. In the region RM13, an edge ED17 and an edge ED18 of the projection surface PF and an image MK9 located at an intersection of the edge ED17 and the edge ED18 are superimposed and displayed on the captured image TI2. The image MK9 is an image indicating the position of a feature portion serving as a mark of the projection surface PF detected at the time of the restoration of the projection system 1. The image MK9 is also an image indicating the position of a mark selected at the present time point among the plurality of mark candidates CM displayed in the region RM2 of the display screen DI1. The image MK9 is an example of the "second image".

As an example, nothing is displayed in the region RM14 and the region RM15.

In the display screen DI3 exemplified in FIG. 9, the images MK6 to MK9 are displayed side by side.

The user of the projection system 1 visually compares the position of the image MK6 on the projection surface PF displayed in the region RM10 and the position of the image MK7 on the projection surface PF displayed in the region RM11. When both the positions are greatly different, the user operates the input device 140 to cause the display apparatus 130 to display the display screen DI1 exemplified in FIG. 7. Then, the user operates the slide bars SB displayed in the region RM1 and thereafter selects a candidate CM for a mark different from the mark selected at the present time point from the plurality of candidates CM for the mark of the projection surface PF displayed in the region RM2. As a result, in the region RM11 of the display screen DI3, the position of the image MK7 is updated to a position corresponding to the mark selected anew.

Similarly, the user of the projection system 1 visually compares the position of the image MK8 on the projection surface PF displayed in the region RM12 and the position of the image MK9 on the projection surface PF displayed in the region RM13. When both the positions are greatly different, the user operates the input device 140 to cause the display apparatus 130 to display the display screen DI1 exemplified in FIG. 7. Then, the user operates the slide bars SB displayed in the region RM1 and thereafter selects a candidate CM for a mark different from the mark selected at the present time point from the plurality of candidates CM for the mark of the projection surface PF displayed in the region RM2. As a result, in the region RM13 of the display screen DI3, the position of the image MK9 is updated to a position corresponding to the mark selected anew.

When the position and the posture of the projection device 30[2] are greatly different between the time of the construction of the projection system 1 and the time of the restoration of the projection system 1, the position of the image MK6 on the projection surface PF displayed in the region RM10 and the position of the image MK7 on the projection surface PF displayed in the region RM11 are greatly different. The position of the image MK8 on the projection surface PF displayed in the region RM12 and the position of the image MK9 on the projection surface PF displayed in the region RM13 are greatly different.

The position in the camera coordinate system of the mark of the projection surface PF corresponding to the image MK6 being the same as the position in the camera coordinate system of the mark of the projection surface PF corresponding to the image MK7 and the position in the camera coordinate system of the mark of the projection surface PF corresponding to the image MK8 being the same as the position in the camera coordinate system of the mark of the projection surface PF corresponding to the image MK9 are directly linked to the accuracy of maintaining the position and the posture of the projection device 30[2]. For this reason, in the present embodiment, in order to minimize a difference in the positions of the marks in the camera coordinate system, the display controller 118 causes the display apparatus 130 to simultaneously display an extraction result of the mark at the time of the restoration of the projection system 1 together with an extraction result of the mark at the time of the construction of the projection system 1.

In the present embodiment, since the projection system 1 includes the two projection devices 30, that is, the projection device 30[1] and the projection device 30[2], the display controller 118 causes the display apparatus 130 to individually display the display screen DI2 corresponding to the projection device 30[1] and the display screen DI3 corresponding to the projection device 30[2]. When the display screen DI2 exemplified in FIG. 8 and the display screen DI3 exemplified in FIG. 9 are compared, the positions of the region RM5 and the region RM6 in the display screen DI2 correspond to the position of the region RM14 in the display screen DI3. The positions of the region RM7 and the region RM8 in the display screen DI2 correspond to the position of the region RM15 in the display screen DI3. The positions of the regions RM10 to RM13 in the display screen DI3 correspond to the position of the region RM9 in the display screen DI2.

The information processing apparatus 10 according to the present embodiment causes the display apparatus 130 to simultaneously display an extraction result of the mark of the projection surface PF at the time of the restoration of the projection system 1 together with an extraction result of the mark of the projection surface PF at the time of the construction of the projection system 1 in the process of restoring the positions and the postures of the projection device 30[1] and the projection device 30[2]. When the user compares both the extraction results, it is possible to minimize an error of a place where the mark is extracted. The information processing apparatus 10 stores an extraction position and an extraction method of the mark at the time of the construction of the projection system 1. For this reason, the information processing apparatus 10 is capable of automatically restoring the position of the mark of the projection surface PF without the user being required to operate the information processing apparatus 10 at the time of the restoration of the projection system 1. If an extraction position of a target is greatly different between the time of the construction and the time of the restoration of the projection system 1, the user is capable of manually reselecting the position of the target. That is, the user is capable of checking the validity of a target position extraction function.

### 2: Modifications

The embodiment explained above can be variously modified. Specific aspects of the modifications are exemplified below. The aspects exemplified below and the aspects explained in the embodiment above can be combined with each other as appropriate within a range in which the aspects do not contradict each other. In the modifications exemplified below, elements having effects and functions equivalent to those in the embodiment are denoted by the reference numerals and signs referred to in the above explanation and detailed explanation of the elements is omitted as appropriate.

### 2-1: Modification 1

In the embodiment explained above, an acquisition date and time of data used to display the images MK2 to MK5 may be displayed on the display screen DI2. Similarly, an acquisition date and time of data used to display the images MK6 to MK9 may be displayed on the display screen DI3.

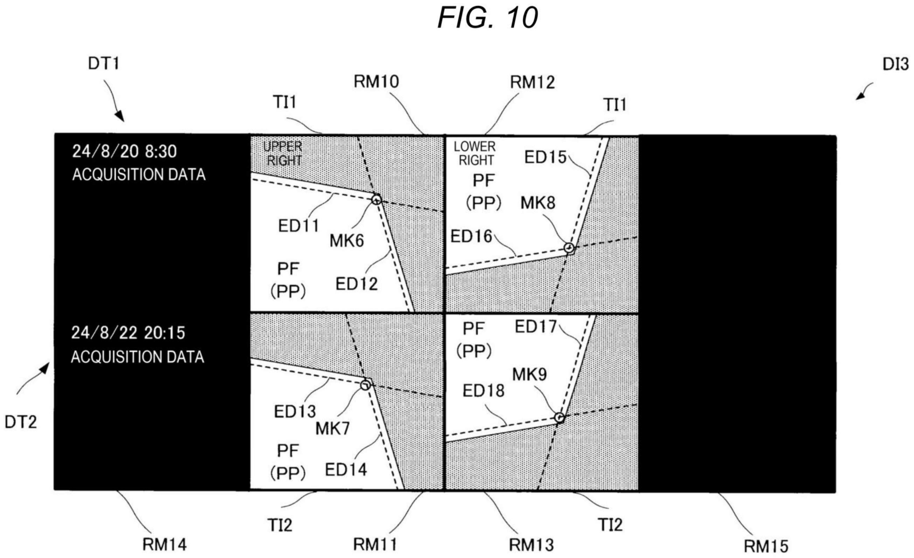

FIG. 10 is a diagram illustrating an example of a display screen DI3 in this modification. An image DT1 indicating the acquisition date and time of the data used to display the image MK6 and the image MK8 is displayed in an upper part of the region RM14 of the display screen DI3. An image DT2 indicating the acquisition date and time of the data used to display the image MK7 and the image MK9 is displayed in a lower part of the region RM14 of the display screen DI3.

When the projection system 1 is restored again after the image MK7 and the image MK9 are displayed on the display screen DI3 as a result of restoring the projection system 1, as an example, a plurality of images including the image MK7 displayed in the region RM11, a plurality of images including the image MK9 displayed in the region RM13, and the image DT2 displayed in the lower part of the region RM14 are updated. On the other hand, as an example, the plurality of images including the image MK6 displayed in the region RM10, the plurality of images including the image MK8 displayed in the region RM12, and the image DT1 displayed in the upper part of the region RM14 are not updated.

### 2-2: Modification 2

In the embodiment explained above, the projection system 1 includes the two projection devices 30, i.e., the projection device 30[1] and the projection device 30[2]. However, the projection system 1 may include only one projection device 30.

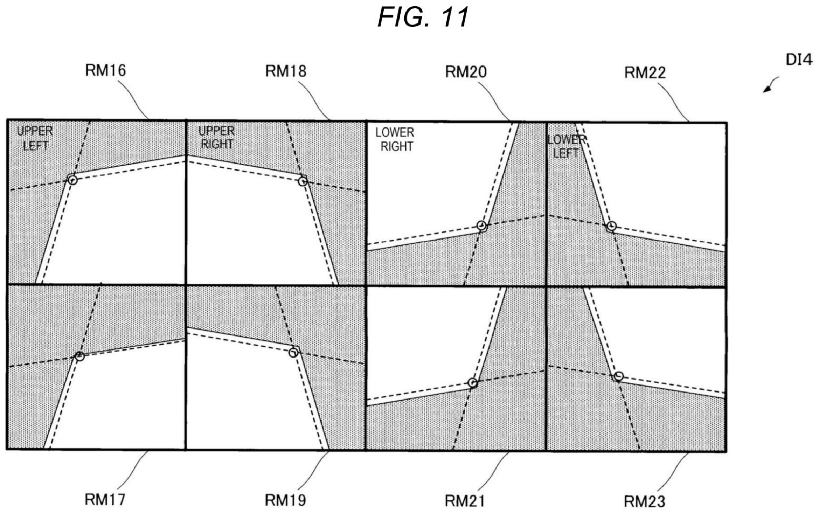

FIG. 11 is a diagram illustrating an example of a display screen DI4 that the display controller 118 causes the display apparatus 130 to display in this modification. The display screen DI4 includes regions RM16 to RM23. In the example illustrated in FIG. 11, the region RM16 includes the same image as the image in the region RM5 of the display screen DI2 exemplified in FIG. 8. The region RM17 includes the same image as the image in the region RM6 of the display screen DI2. The region RM18 includes the same image as the image in the region RM10 of the display screen DI3 exemplified in FIG. 10. The region RM19 includes the same image as the image in the region RM11 of the display screen DI3. The region RM20 includes the same image as the image in the region RM12 of the display screen DI3. The region RM21 includes the same image as the image in the region RM13 of the display screen DI3. The region RM22 includes the same image as the image in the region RM7 of the display screen DI2 exemplified in FIG. 8. The region RM23 includes the same image as the image in the region RM8 of the display screen DI2.

### 2-3: Modification 3

In the embodiment explained above, the "first image" and the "second image" described above are displayed on a screen not including the entire image AP of the projection surface PF, such as the display screen DI2. However, the "first image" and the "second image" described above may be displayed on a screen including the entire image AP of the projection surface PF, such as the display screen DI1.

As an example, according to an instruction operation for a first corner of the entire image AP of the projection surface PF, the first display controller 118[1] may cause the display apparatus 130 to display the "first image" described above at a position closest to the first corner among a plurality of corners included in the entire image AP. According to the instruction operation for the first corner of the entire image AP of the projection surface PF, the second display controller 118[2] may cause the display apparatus 130 to display the "second image" described above at a position closest to the first corner among the plurality of corners included in the entire image AP.

The "first corner" described above is an example of a "first feature point". The "plurality of corners" is an example of "a plurality of feature points".

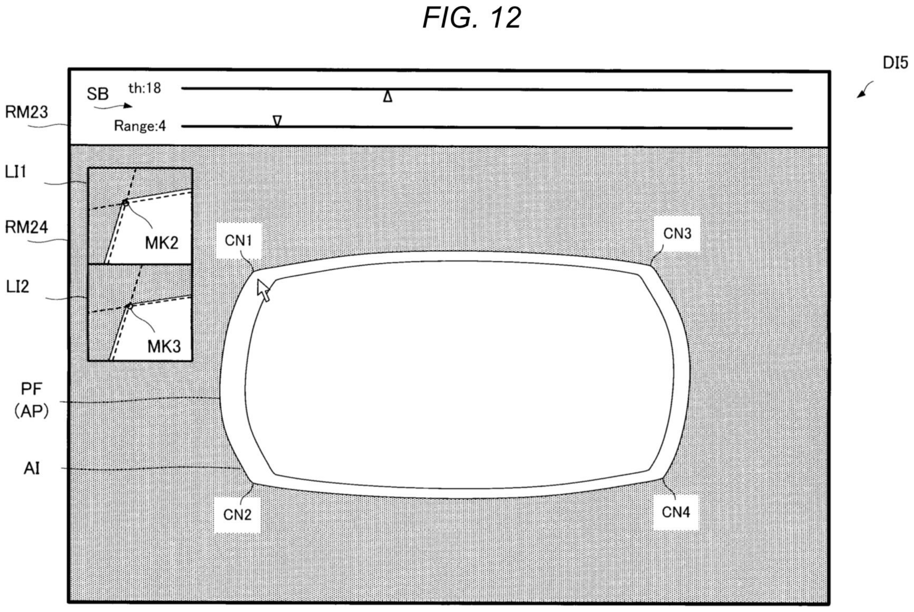

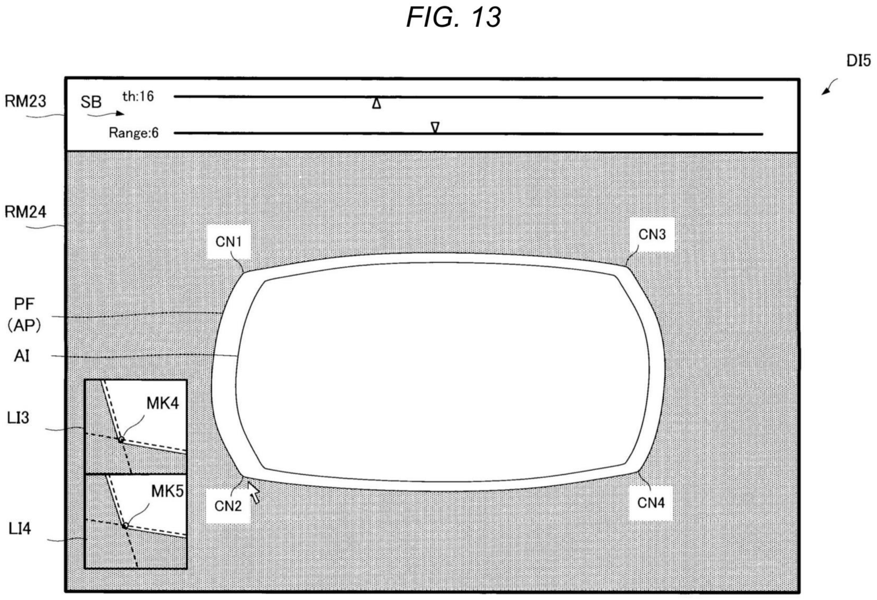

FIGS. 12 and 13 are diagrams illustrating examples of a display screen DI5 that the display controller 118 causes the display apparatus 130 to display in this modification. The display screen DI5 includes a region RM23 and a region RM24. In the region RM23, as in the region RM1 of the display screen DI1 exemplified in FIG. 7, the slide bars SB are displayed. In the region RM24, as in the region RM2 of the display screen DI1, the entire image AP of the projection surface PF is displayed.

As exemplified in FIG. 12, when the user brings a mouse pointer close to an upper left corner CN1 of the entire image AP, an image LI1 and an image LI2 are displayed at positions closest to the upper left corner CN1 among the four corners CN of the entire image AP. The image LI1 is the same image as the image displayed in the region RM5 of the display screen DI2 exemplified in FIG. 8. The image LI1 includes the image MK2. The image LI2 is the same image as the image displayed in the region RM6 of the display screen DI2. The image LI2 includes the image MK3.

As exemplified in FIG. 13, when the user brings the mouse pointer close to the lower left corner CN2 of the entire image AP, an image LI3 and an image LI4 are displayed at positions closest to the lower left corner CN2 among the four corners CN of the entire image AP. The image LI3 is the same image as the image displayed in the region RM7 of the display screen DI2 exemplified in FIG. 8. The image LI3 includes the image MK4. The image LI4 is the same image as the image displayed in the region RM8 of the display screen DI2. The image LI4 includes the image MK5.

The same applies to an upper right corner CN3 and a lower right corner CN4. The operation of bringing the mouse pointer close to the corners of the entire image AP is an example of an "instruction operation".

### 2-4: Modification 4

In the embodiment explained above, the "first image" and the "second image" are simultaneously displayed. However, the "first image" and the "second image" may be sequentially displayed at different timings from each other.

As an example, the operation of the user for causing the display apparatus 130 to display the "first image" and the operation of the user for causing the display apparatus 130 to display the "second image" may be different from each other. In this case, the operation of the user for causing the display apparatus 130 to display the "first image" is an example of "first operation". The operation of the user for causing the display apparatus 130 to display the "second image" is an example of "second operation".

In other words, the "first image" is displayed in response to the receiver 112 receiving the "first operation" for displaying the "first image" with the display apparatus 130. The "second image" is displayed in response to the receiver 112 receiving the "second operation" for displaying the "second image" with the display apparatus 130.

When a time point when the "first operation" is executed and a time point when the "second operation" is executed are different from each other, the "first image" and the "second image" are sequentially displayed at different timings from each other.

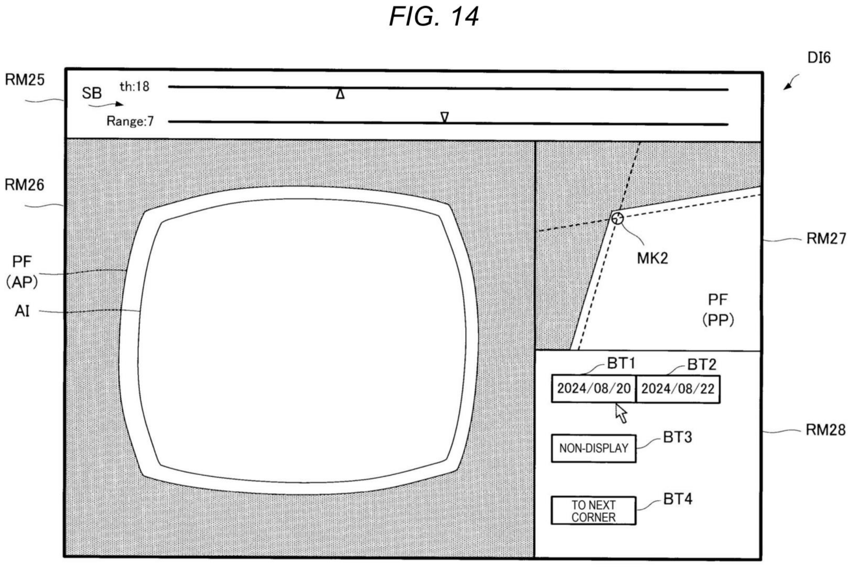

FIGS. 14 to 16 are diagrams illustrating examples of a display screen DI6 that the display controller 118 causes the display apparatus 130 to display in this modification. The display screen DI6 includes regions RM25 to RM28. In the region RM25, as in the region RM1 of the display screen DI1 exemplified in FIG. 7, the slide bars SB are displayed. In the region RM26, as in the region RM2 of the display screen DI1, the entire image AP of the projection surface PF is displayed. In the region RM27, the "first image" or the "second image" is displayed. In the region RM28, buttons BT1 to BT4 are displayed.

As illustrated in FIG. 14, when the button BT1 is operated by the user, the "first image" is displayed in the region RM27. In the example illustrated in FIG. 14, the same image as the image in the region RM5 of the display screen DI2 exemplified in FIG. 8 is displayed in the region RM27. The image includes the image MK2. Here, the operation for the button BT1 by the user is an example of the "first operation". The image of the button BT1 is an example of a "first operation image". In the example illustrated in FIG. 14, the image of the button BT1 includes information indicating an acquisition date and time of data used for displaying the image MK2. As another example, the image of the button BT1 may include information indicating the "first period" described above. The information indicating the "first period" is an example of "first information".

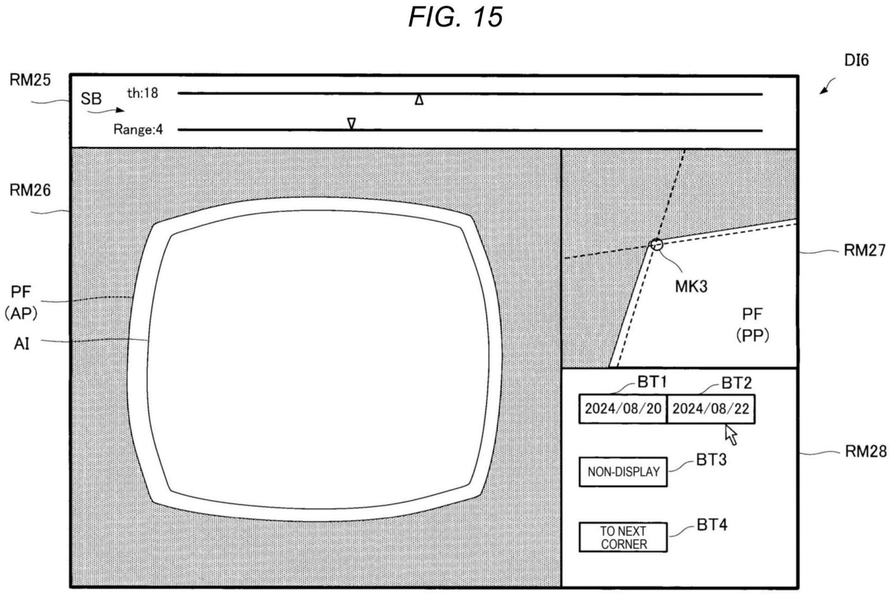

As illustrated in FIG. 15, when the button BT2 is operated by the user, the "second image" is displayed in the region RM27. In the example illustrated in FIG. 15, the same image as the image in the region RM6 of the display screen DI2 exemplified in FIG. 8 is displayed in the region RM27. The image includes the image MK3. Here, the operation for the button BT2 by the user is an example of the "second operation". The image of the button BT2 is an example of a "second operation image". In the example illustrated in FIG. 15, the image of the button BT2 includes information indicating an acquisition date and time of data used for displaying the image MK3. As another example, the image of the button BT2 may include information indicating the "second period". The information indicating the "second period" is an example of "second information".

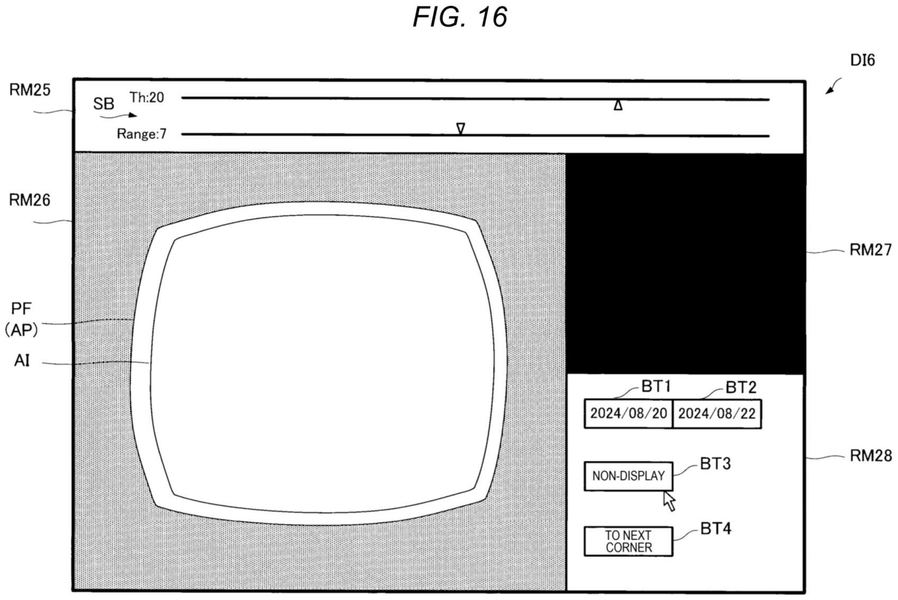

As illustrated in FIG. 16, when the button BT3 is operated by the user, nothing is displayed in the region RM27.

In the examples illustrated in FIGS. 14 and 15, the partial image PP including the upper left corner of the projection surface PF is displayed in the region RM27. When desiring to cause the display apparatus 130 to display the partial image PP including the other corners of the projection surface PF in the region RM27, the user operates the button BT4 to switch an image displayed in the region RM27.

### 2-5: Modification 5

In the embodiment explained above, the "first image" and the "second image" are displayed on the display apparatus 130 provided in the information processing apparatus 10. However, the "first image" and the "second image" may be projected onto the projection surface PF by being projected onto the projection surface PF by the projection device 30[1] or the projection device 30[2]. In this case, the projection device 30[1] and the projection device 30[2] are examples of a " display apparatus".

Specifically, the processing apparatus 110 provided in the information processing apparatus 10 captures an image including the "first image" and the "second image" displayed on the display apparatus 130. Then, the processing apparatus 110 may cause the projection device 30[1] or the projection device 30[2] to project the captured image onto the projection surface PF.

### 2-6: Modification 6

In the embodiment explained above, the information processing apparatus 10 and the projection device 30[1] are separate from each other. However, the information processing apparatus 10 and the projection device 30[1] may be implemented as a single device provided in the same housing.

Similarly, in the embodiment, the information processing apparatus 10 and the projection device 30[2] are separate from each other. However, the information processing apparatus 10 and the projection device 30[2] may be implemented as a single device provided in the same housing.

### 2-7: Modification 7

In the embodiment explained above, each of the projection device 30[1] and the projection device 30[2] includes the imaging apparatus 320. However, at least one imaging apparatus 320 of the two imaging apparatuses 320 may be provided in the information processing apparatus 10.

### 2-8: Modification 8

In the embodiment explained above, the flows illustrated in FIGS. 4 and 5 are executed by the processing apparatus 110. However, some or all of the flows illustrated in FIGS. 4 and 5 may be executed by the processing apparatus 330.

### 3: Summary of the present disclosure

A summary of the present disclosure is appended below.

(Appendix 1) A display method including: displaying, with a display apparatus, a first image indicating a position, on a projection surface in a first captured image, of a feature portion serving as a mark of the projection surface extracted based on the first captured image acquired by imaging the projection surface with an imaging apparatus in a first period; and displaying, with the display apparatus, a second image indicating a position, on the projection surface in a second captured image, of a feature portion serving as a mark of the projection surface extracted based on the second captured image acquired by imaging the projection surface with the imaging apparatus in a second period later than the first period.

With the configuration explained above, a user can grasp a situation as to whether parts extracted as the corners of the projection surface are the same or substantially the same in the two periods.

More specifically, with the configuration explained above, by checking the first image and the second image, the user can easily grasp a degree of coincidence between the position of the feature portion on the projection surface in the first period and the position of the feature portion on the projection surface in the second period, that is, the situation as to whether, for example, the parts extracted as the corners of the projection surface are the same or substantially the same in the two periods.

(Appendix 2) The display method described in Appendix 1, wherein the first image is displayed to be superimposed on the first captured image including the projection surface, and the second image is displayed to be superimposed on the second captured image including the projection surface.

With the configuration explained above, the user can more easily grasp the situation as to whether, for example, the parts extracted as the corners of the projection surface are the same or substantially the same in the two periods.

(Appendix 3) The display method described in Appendix 1 or 2, wherein the first image is an image indicating a coordinate value of a position of the feature portion in a coordinate system of the first captured image, and the second image is an image indicating a coordinate value of a position of the feature portion in a coordinate system of the second captured image.

With the configuration explained above, the user can more easily grasp the situation as to whether, for example, the parts extracted as the corners of the projection surface are the same or substantially the same in the two periods.

(Appendix 4) The display method described in any one of Appendixes 1 to 3, wherein the first image and the second image are displayed side by side on a display screen of the display apparatus.

With the configuration explained above, the user can more easily grasp the situation as to whether, for example, the parts extracted as the corners of the projection surface are the same or substantially the same in the two periods.

(Appendix 5) The display method described in any one of Appendixes 1 to 3, wherein the first image is displayed in response to receiving a first operation for displaying the first image with the display apparatus, and the second image is displayed in response to receiving a second operation for displaying the second image with the display apparatus.

With the configuration explained above, the display method of Appendix 5 can display the first image and the second image at timing preferable for the user.

(Appendix 6) The display method described in Appendix 5, further including: displaying a first operation image for receiving the first operation with the display apparatus; and displaying a second operation image for receiving the second operation with the display apparatus, wherein the first operation image includes first information indicating the first period, and the second operation image includes second information indicating the second period.

With the configuration explained above, the user can easily grasp which operation image should be selected to display a target image.

(Appendix 7) The display method described in any one of Appendixes 1 to 6, wherein a calculation method of extracting the feature portion serving as the mark of the projection surface based on the first captured image is the same as a calculation method of extracting the feature portion serving as the mark of the projection surface based on the second captured image.

With the configuration explained above, the display method of Appendix 7 can improve the validity of a comparison result by unifying the calculation method.

(Appendix 8) The display method described in any one of Appendixes 1 to 7, further including displaying an entire image of the projection surface with the display apparatus, wherein the displaying the first image with the display apparatus includes displaying the first image at a position closest to a first feature point among a plurality of feature points included in the entire image in response to an instruction operation for the first feature point included in the entire image, and the displaying the second image with the display apparatus includes displaying the second image at a position closest to the first feature point among the plurality of feature points in response to the instruction operation.

When checking the first image and the second image, by causing the display apparatus to display, near the feature point indicated by the user, the first image and the second image including the feature point, the user can easily grasp a correspondence relationship between the feature point and the first image and the second image.

(Appendix 9) An information processing apparatus including one or a plurality of processors configured to execute: first display control for displaying, with a display apparatus, a first image indicating a position, on a projection surface in a first captured image, of a feature portion serving as a mark of the projection surface extracted based on the first captured image acquired by imaging the projection surface with an imaging apparatus in a first period; and second display control for displaying, with the display apparatus, a second image indicating a position, on the projection surface in a second captured image, of a feature portion serving as a mark of the projection surface extracted based on the second captured image acquired by imaging the projection surface with the imaging apparatus in a second period later than the first period.

With the configuration explained above, a user can grasp a situation as to whether parts extracted as the corners of the projection surface are the same or substantially the same in the two periods.

More specifically, with the configuration explained above, by checking the first image and the second image, the user can easily grasp a degree of coincidence between the position of the feature portion on the projection surface in the first period and the position of the feature portion on the projection surface in the second period, that is, the situation as to whether, for example, the parts extracted as the corners of the projection surface are the same or substantially the same in the two periods.

(Appendix 10) A non-transitory computer-readable storage medium storing a program for causing a processor to execute: displaying, with a display apparatus, a first image indicating a position, on a projection surface in a first captured image, of a feature portion serving as a mark of the projection surface extracted based on the first captured image acquired by imaging the projection surface with an imaging apparatus in a first period; and displaying, with the display apparatus, a second image indicating a position, on the projection surface in a second captured image, of a feature portion serving as a mark of the projection surface extracted based on the second captured image acquired by imaging the projection surface with the imaging apparatus in a second period later than the first period.

With the configuration explained above, a user can grasp a situation as to whether parts extracted as the corners of the projection surface are the same or substantially the same in the two periods.

More specifically, with the configuration explained above, by checking the first image and the second image, the user can easily grasp a degree of coincidence between the position of the feature portion on the projection surface in the first period and the position of the feature portion on the projection surface in the second period, that is, the situation as to whether, for example, the parts extracted as the corners of the projection surface are the same or substantially the same in the two periods.

## Claims

1. A display method comprising:
displaying, with a display apparatus, a first image indicating a position, on a projection surface in a first captured image, of a feature portion serving as a mark of the projection surface extracted based on the first captured image acquired by imaging the projection surface with an imaging apparatus in a first period; and
displaying, with the display apparatus, a second image indicating a position, on the projection surface in a second captured image, of a feature portion serving as a mark of the projection surface extracted based on the second captured image acquired by imaging the projection surface with the imaging apparatus in a second period later than the first period.

2. The display method according to claim 1, wherein
the first image is displayed to be superimposed on the first captured image including the projection surface, and
the second image is displayed to be superimposed on the second captured image including the projection surface.

3. The display method according to claim 1, wherein
the first image is an image indicating a coordinate value of a position of the feature portion in a coordinate system of the first captured image, and
the second image is an image indicating a coordinate value of a position of the feature portion in a coordinate system of the second captured image.

4. The display method according to claim 1, wherein the first image and the second image are displayed side by side on a display screen of the display apparatus.

5. The display method according to claim 1, wherein
the first image is displayed in response to receiving a first operation for displaying the first image with the display apparatus, and
the second image is displayed in response to receiving a second operation for displaying the second image with the display apparatus.

6. The display method according to claim 5, further comprising:
displaying a first operation image for receiving the first operation with the display apparatus; and
displaying a second operation image for receiving the second operation with the display apparatus, wherein
the first operation image includes first information indicating the first period, and
the second operation image includes second information indicating the second period.

7. The display method according to claim 1, wherein a calculation method of extracting the feature portion serving as the mark of the projection surface based on the first captured image is the same as a calculation method of extracting the feature portion serving as the mark of the projection surface based on the second captured image.

8. The display method according to claim 1, further comprising displaying an entire image of the projection surface with the display apparatus, wherein
the displaying the first image with the display apparatus includes displaying the first image at a position closest to a first feature point among a plurality of feature points included in the entire image in response to an instruction operation for the first feature point included in the entire image, and
the displaying the second image with the display apparatus includes displaying the second image at a position closest to the first feature point among the plurality of feature points in response to the instruction operation.

9. An information processing apparatus comprising one or a plurality of processors configured to execute:
first display control for displaying, with a display apparatus, a first image indicating a position, on a projection surface in a first captured image, of a feature portion serving as a mark of the projection surface extracted based on the first captured image acquired by imaging the projection surface with an imaging apparatus in a first period; and
second display control for displaying, with the display apparatus, a second image indicating a position, on the projection surface in a second captured image, of a feature portion serving as a mark of the projection surface extracted based on the second captured image acquired by imaging the projection surface with the imaging apparatus in a second period later than the first period.

10. A non-transitory computer-readable storage medium storing a program for causing a processor to execute:
displaying, with a display apparatus, a first image indicating a position, on a projection surface in a first captured image, of a feature portion serving as a mark of the projection surface extracted based on the first captured image acquired by imaging the projection surface with an imaging apparatus in a first period; and
displaying, with the display apparatus, a second image indicating a position, on the projection surface in a second captured image, of a feature portion serving as a mark of the projection surface extracted based on the second captured image acquired by imaging the projection surface with the imaging apparatus in a second period later than the first period.
